# EUROPEAN PATENT SPECIFICATION

(11) **EP 3 100 018 B1**
(45) Date of publication and mention of the grant of the patent: **02.01.2019**
(21) Application number: 15708309.8
(22) Date of filing: 29.01.2015
(51) Int. Cl.: G01L 27/00

(54) **MINIATURIZED DEVICE FOR PRESSURE MEASUREMENTS OVER A VERY WIDE RANGE**
MINIATURISIERTES GERÄT ZUR DRUCKMESSUNG IN EINEM SEHR WEITEN RANGE
DISPOSITIF MINIATURISÉ POUR LES MESURES DE PRESSION SUR UNE TRÈS LARGE GAMME

(30) Priority: 31.01.2014 IT MI20140138
(43) Date of publication of application: 07.12.2016
(73) Proprietor: Nanotech Analysis S.r.l., 10128 Torino (IT)
(72) Inventor: MENSA, Gianpiero, I-10128 Torino (IT)
(74) Representative: Brunazzi, Stefano
(86) International application number: PCT/IB2015/050678
(87) International publication number: WO 2015/114557

(56) References cited:
- EP-A1- 2 309 241
- US-A- 5 440 931
- US-A1- 2007 012 116
- US-B1- 6 452 167

## Description

### TECHNOLOGICAL BACKGROUND OF THE INVENTION

### Field of Application.

The present invention relates to the field of pressure sensor devices, particularly miniaturized sensor devices, for use to measure level pressures over a very wide range of values (from high vacuum conditions to very high pressure conditions) and, when under low pressure conditions, to measure partial pressures and gas concentrations.

### Description of the Prior Art.

In the field of sensors, pressure sensor devices play an increasingly important role; such devices has a wide and growing context of use, especially in industrial applications, within production machines or plants or manufacturing environments or systems for analysis and measurement, for example to manage the fluid-dynamics of a whole system.

In these applications, it may be necessary to measure the pressure with high precision, in many different points, in often unfavorable environmental conditions, thus resulting in critical, or even extreme, operating conditions for the devices. Moreover, the pressure conditions to which the devices can be subjected, and which they have to detect, may vary within a very wide range, from very low pressures typical of high vacuum (for example, 10⁻¹³ mbar) to very high pressures (for example, 10⁴ mbar).

Individual devices able to operate over this very wide pressures range, as it would be desirable, are not known.

The existing sensor devices are capable to operate, at the most, over very narrow sub-ranges, relative to the above-mentioned range.

For example, for pressures that are not very low, and considering only high performance, i.e., "high end", devices, capacitive diaphragm pressure sensors are known, which, depending on design parameters, can measure pressures within different sub-ranges, that are however subsets of the range from 10⁻⁴ mbar to 10³ mbar. However, there are no known individual devices able to measure a pressure over the whole range from 10⁻⁴ mbar to 10⁴ mbar. If one wants to cover this range, a sensor system comprising multiple individual devices in parallel must be used: for example, at least three capacitive pressure sensor in parallel may be necessary.

For pressures equal or less than 10⁻⁴ mbar, further devices are to be used, based on a totally different, rather sophisticated and complex concept, usually called "vacuum gauges".

Known vacuum gauges are mainly of two types: "Hot Cathode Ionization Gauge" (e.g., of the Bayard-Alpert type) and "Cold Cathode Ionization Gauge" (e.g., Penning gauge and Inverted Magnetron IMG, which ionize the residual gas by means of a glow and/or plasma discharge). For example, the "Bayard-Alpert" vacuum gauges are substantially based on an emission of electrons, which ionize the gas particles that are present, and on the subsequent detection of the obtained ions, the number of which depends on the concentration of the gas particles, and thus on the pressure.

These devices, in turn, must be inserted into a complex sensor system, in parallel to the capacitive pressure sensor, if the range of detectable pressures requires to be extended to low values.

In any case, the minimum pressure values that are measurable by using known types of vacuum gauges can hardly reach pressure values below 10⁻¹⁰ or 10⁻¹¹ mbar, at most.

This is due to inherent constraints of the physic phenomena involved in the detection, particularly to the generation of X-rays that inevitably occurs when ionizing electrons impact on grids for ion extraction/detection. These X-rays, by also colliding on the ion detectors, generate spurious signals that totally distort the detection results (detected ions), when pressures are very low.

Therefore, for pressures in the order of 10⁻¹² - 10⁻¹³ mbar, it can be even said that there are no known miniaturized devices, of a standard type, which are capable of measuring such pressures.

Even considering only pressure ranges that are measurable by the known devices, it has been noted above that only a complex system, comprising multiple individual devices in parallel, can comply to the need of wide range pressure measurements.

The drawback of complexity, which causes the further disadvantages of high costs and low reliability, is worsened by the fact that each individual device, in order to be able to work, requires "macroscopic" electronic components, in addition to the sensor itself: for example, processing modules, signal processing modules, interface modules, either wired or wireless, towards higher-level controllers, etc.

Moreover, in addition to the complexity resulting e.g., from the considerable overall dimensions, power consumption and costs, the fact of using very structured sensor systems implies a tendency to decrease reliability and increases the requirements for initial calibration, diagnostic, and possibly recalibration procedures.

Such procedures must be performed *ad hoc* for each individual device sensor over a narrow range, and moreover, generally, by extracting each device from the system and proceeding with diagnostics and recalibration outside the instrument/environment where they are normally installed, i.e., off-line.

In summary, in light of the above, the need to have a pressure sensor device which is, even when considered individually, as "universal" as possible (i.e., capable of measuring a pressure over a very wide range, such as for example 10⁻¹³ - 10⁴ mbar) is much felt.

There is also a need to make this device as miniaturized as possible, while still maintaining a high measurement precision at any pressure level, within the above-mentioned range.

In addition, there is a need that this device is as "self-contained" as possible, in terms of calibration and diagnostics.

Finally, in the vacuum or low pressure situations, it would be convenient to be able to perform not only measurements of total pressure but also of partial pressures and gas concentrations, in an effective way by an individual device.

None of the above-mentioned known devices is able to fulfill the above individual needs and least of all the combination of such needs.

The possibility of having a "universal" miniaturized and self-contained pressure sensor device appears a really challenging objective, considering that the various needs (for example miniaturization and self-containment) may result in conflicting design requirements which are very difficult to fulfill altogether.

In light of the above, the object of the present invention is to devise and provide a miniaturized device for pressure measurements over a very wide range and for measurements of gas concentration, and a related measurement method, which results to be improved such as to fulfill the above-mentioned needs, and able to at least partially overcome the drawbacks described above with reference to the prior art.

The U.S. Patent Application US 2007/012116 A1 describes a wide-range combination vacuum gauge apparatus.

The U.S. Patent US 5,440,931 A discloses a reference element for high accuracy silicon capacitive pressure sensor.

The European Patent Application EP 2 309 241 A1 describes a MEMS pressure sensor.

The U.S. Patent US 6,452,167 B1 discloses a miniature quadrupole mass spectrometer having a cold cathode ionization source.

### SUMMARY OF THE INVENTION

This object is achieved by a device according to claim 1.

Further embodiments of this device are defined in the dependent claims 2 to 13.

A method for measuring pressure over a very wide range, carried out by the device of the invention, is defined in claim 14.

### BRIEF DESCRIPTION OF THE DRAWINGS

Further characteristics and advantages of a miniaturized device for pressure and concentration measurements over a very wide range, according to the present invention, will result from the following description of preferred embodiments given by way of indicative though non-limiting examples, with reference to the attached figures, in which:
- Fig. 1 illustrates a simplified functional diagram of a device, according to the invention;
- Fig. 2 illustrates a schematic structural diagram of an embodiment of a device according to the invention;
- Fig. 3 illustrates a structural diagram of a further embodiment of a device according to the invention;
- Fig. 4 shows another exemplary implementation of the device of Fig. 3;
- Figs. 5A and 5B illustrate a structural diagram of another embodiment of a device according to the invention;
- Fig. 6 illustrates a structural diagram of a further embodiment of a device according to the invention;

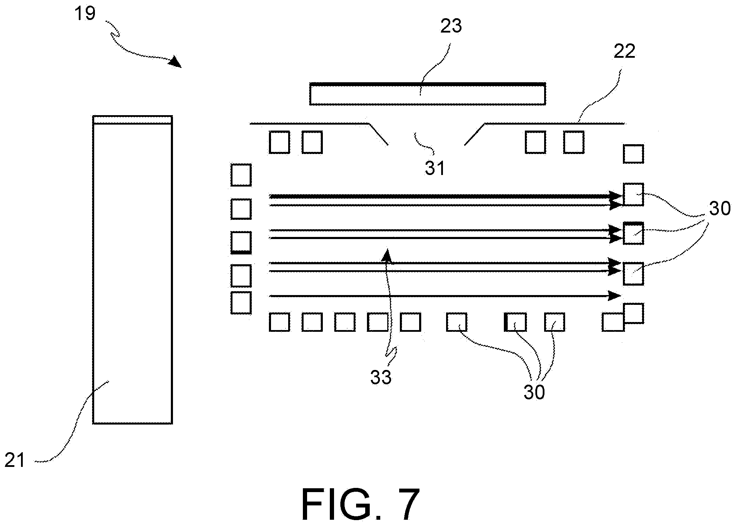

- Fig. 7 illustrates a mode of ion extraction provided in an embodiment of the device.

### DETAILED DESCRIPTION

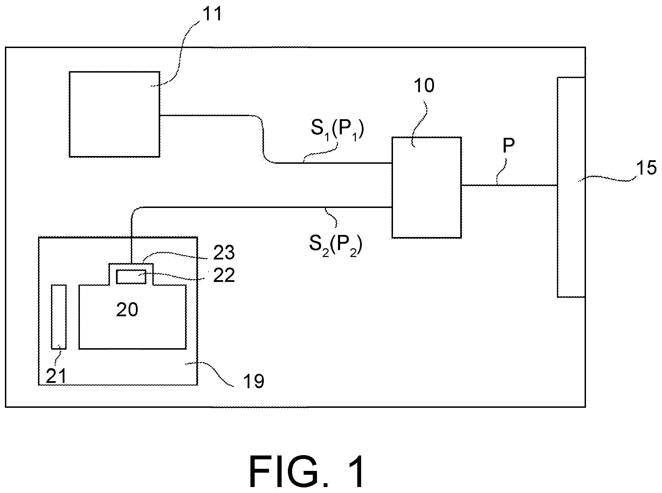

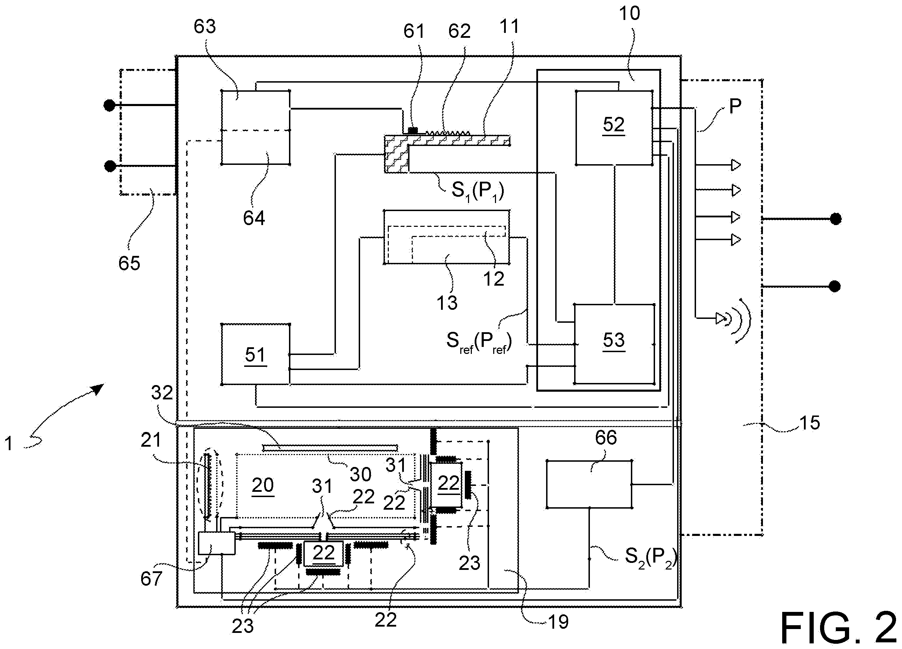

With reference to the figures, particularly to Figs. 1 and 2, a miniaturized device 1 for pressure and gas concentration measurements, over a very wide range, is described.

This device 1 comprises at least one first electro-mechanical miniaturized pressure sensor member 11, configured to detect a first pressure value P₁ and to generate a first electrical signal S₁ representative of the above-mentioned first pressure value P₁.

The device 1 further comprises an ionization-based detection member 19, configured to detect a second pressure value P₂ and to generate a second electrical signal S₂ representative of the above-mentioned second pressure value P₂. The ionization-based detection member 19 comprises at least one ionization source 21, an ionization region 20, ion extraction means 22 and at least one ion detector 23, configured to detect ions and generate the above-mentioned second electrical signal S₂, depending on the amount of ions detected and representative of the second pressure value P₂.

The device 1 also comprises electronic processing means 10, which are operatively connected to the first sensor member 11 and to the ionization-based detection member 19, and are configured to determine a measured pressure value P based on the above-mentioned first electrical signal S₁ and second electrical signal S₂.

Finally, the device 1 comprises interface means 15, operatively connected to the electronic processing means 10, and configured to output the measured pressure value P.

The first sensor member 11, the ionization-based detection member 19, the electronic processing means 10 and the interface means 15 are all included in a single integrated device.

It should be noted that as "integrated device" is meant herein a device that is manufactured by means of integrated micro/nano-electronic techniques and that is contained, or containable, in a single, individual package.

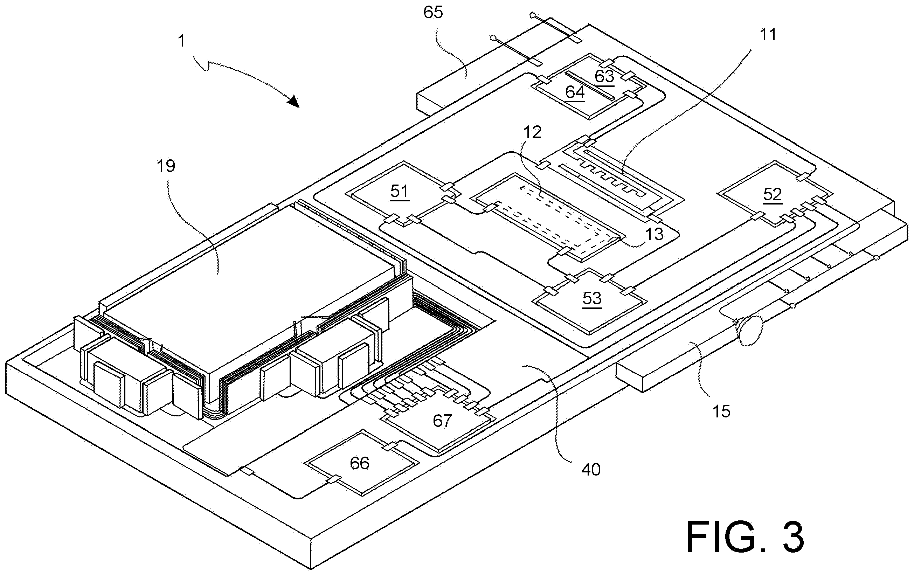

According to a preferred exemplary implementation, the device 1 is an integrated device made by means of a single chip 40 (for example shown in Fig. 3), typically made of silicon. In this case, the first sensor member 11, the ionization-based detection member 19, the electronic processing means 10 and the interface means 15 are all included, i.e., integrated, in the single chip 40 of the integrated device 1.

According to a different example, also included in the invention, the device 1 comprises two half-chips, which are connected to each other also at a microscopic level.

According to other exemplary implementations, the device 1 may comprise multiple chips connected to each other also at a microscopic scale, or an individual multi-layer chip, such as to obtain anyway an integrated device.

Based on the above, the definition of "miniaturized device" can be also understood, i.e., a device which, by being integrated, has a size in the micrometric scale, for example of an overall order of magnitude of hundreds of µm² or of mm², which size is still lower than the minimum size that can be handled and operated, wherein such minimum size is obtained by providing the device with a suitable packaging.

It should be further noted that such a miniaturization not only concerns the actual sensor members (which allows the measurement range to be extended) but also the further processing and interface members belonging to the device (which contributes to improve the signal-to-noise ratio).

According to an exemplary implementation, related to a situation where the range of measurable pressures is split into two measurement sub-ranges, the electronic processing means 10 of the device 1 are configured to generate the measured pressure value P as coincident with the first P₁ or the second P₂ detected pressure values (thus, based on the first or second electrical signals, S₁ or S₂, respectively), depending on the fact that the pressure to be measured belongs to one or the other one of the measurement sub-ranges.

In an implementation option, the electronic processing means 10 are configured to automatically detect the measurement sub-range, based on a sequential activation of the device 1 starting from the first sensor member 11. Therefore, according to this option, the device can be operated in any environment, at any pressure level from 10⁻¹³ mbar to 10⁴ mbar. Upon activation, the processing means 10 activate the first electro-mechanical sensor member 11, which is able to operate over an operating range comprising the first sub-range (for example, from 10⁻⁴ mbar to 10⁴ mbar). If the electro-mechanical sensor member 11 generates a meaningful result (i.e., a valid value of Pi), this reveals that the environment pressure is within the first pressure sub-range, and the detected value P₁ is provided in output as the result of measured pressure P. Instead, if the electro-mechanical sensor member 11 does not generate a meaningful result, this reveals that the environment pressure is within the second pressure sub-range, and thus the electronic processing means 10 activate the ionization-based detection member 19, able to operate over an operative range comprising the second sub-range (for example, from 10⁻¹³ mbar to 10⁻⁴ mbar), and the value P₂ detected from the latter is provided in output as the result of measured pressure P. It should be noted that the operating ranges of the sensor member 11 and detection member 19 can also extend beyond the first and second sub-range respectively, and can be partially overlapping.

The characteristic and the methodology described above allow using the device 1 as an almost universal pressure sensor.

According to one embodiment (for example shown in Fig. 2), the device 1 also comprises at least one second electro-mechanical miniaturized pressure sensor member 12 (which will be herein also called "reference sensor 12") arranged within a respective casing 13, suitable to seal the second sensor member 12 and configured to detect a third pressure value P_{ref}, having a function of reference pressure value, and to generate a reference electrical signal S_{ref}, representative of the reference pressure value P_{ref}. As it will be shown below, such second sensor member 12 contributes to improve the measurement precision of the device and to enable self-calibration and self-diagnostics procedures.

The first 11 and second 12 miniaturized electro-mechanical sensor members will be now considered in greater detail.

Each of the miniaturized electro-mechanical sensor members can be made, in principle, by using any electro-mechanical transducer, capable to provide an electrical variable representative of the detected pressure.

Particularly, the first 11 and the second sensor member 12 are configured to have a mechanical or electro-mechanical behaviour, respectively correlated to a first and a second mechanical or electro-mechanical variable (for example, position, or movement, or oscillation), depending on the pressure (P₁, P₂) or on the fluid-dynamics to which the sensor member is respectively subjected.

Moreover, the first 11 and second 12 sensor members are further configured to either generate or transform the above-mentioned first electrical signal S₁ and reference electrical signal S_{ref} (representative of the first pressure value P₁ and the reference pressure value P_{ref}, respectively) based on the respective first and second mechanical or electro-mechanical variables that are sensible to pressure or to fluid-dynamics.

For example, the amplitude or resonance frequency or width of the spectrum peak or other electrical variables of the electrical signals S₁ and S₂ can be correlated and can represent (according to *per-se* known theoretical perspectives) a pressure value detected by the respective sensor member.

It should be noted that the two sensor members, in a preferred exemplary embodiment, are identical, and are designed to behave in the same way, based on the same principles and on the same variables.

In other exemplary embodiments, the two sensor members can even differ from each other, as long as the correlation of their behaviours is precisely known, such as to allow to define a "nominal behaviour" and, as it will be better explained herein below, to identify possible deviations of the first sensor member 11 from that "nominal behaviour".

According to a preferred exemplary embodiment, the first 11 and second 12 sensor members are similar to each other, and each of them comprises a respective oscillating member of the MEMS/NEMS (Micro/Nano-Electro-Mechanical System) type.

Particularly, according to an implementation option, such MEMS/NEMS oscillating member comprises a micro-cantilever configured to oscillate with a dynamic response depending on the pressure to which it is subjected.

Therefore, in Figs. 2-4, a first micro-cantilever, that is the first sensor member, is designated as 11, while a second micro-cantilever, that is the second sensor members is designated as 12; the second micro-cantilever is illustrated in a dashed line, because it is actually covered by the casing 13, in the illustrated views.

The micro-cantilever operating principle provides that the characterizing electro-mechanical variable is an oscillation: the micro-cantilever oscillates with a dumping factor α depending on the pressure to which it is subjected. Therefore, it is able to generate an electrical signal (i.e., S₁ or S_{ref}) whose dynamic response is representative of the pressure to which the micro-cantilever is subjected. Typically, the dumping factor α is inversely proportional to the (miniaturized) thickness d of the micro-cantilever. Therefore, the miniaturization of the micro-cantilever (and, generally speaking, of the sensor member) is one of the aspects that contribute to make the range of pressure values, measurable by the device of the invention, especially wide.

According to an implementation option, each of the two micro-cantilevers 11, 12, is excited by applying a forcing waveform having a known frequency. The dynamic response and, accordingly, the related typical parameters, like for example resonance frequency, Q factor, oscillation amplitude, depend on the pressure. For this purpose, the device may further comprise a function generator circuit or frequency generator 51, configured to cause an input oscillation at each of the first and second micro-cantilevers, by means of an excitation signal.

Moreover, in this option, it is provided that the electronic processing means 10 comprise a processing unit 52 and a demodulating circuit 53, configured to estimate first and second output oscillation frequencies of the first and second micro-cantilevers, respectively, based on the frequency of either the first electrical signal S₁ or of the reference electrical signal S_{ref}, respectively, and of the excitation signal; the demodulating circuit 53 then communicates to the processing unit 52 an information related to these first and second oscillation frequencies and excitation signal frequency.

According to an implementation example, as shown in the figures, this demodulating circuit 53 is a signal "lock-in" circuit.

The example illustrated above is actually based on a double MEMS/NEMS oscillator, integrated in the device, where the two MEMS/NEMS oscillators share the frequency generation and demodulation lock-in circuit, and are instead characterized by the first and second micro-cantilevers, as the respective active member, as well as by the excitation signal as a reference.

The frequency generation circuit 51 "feeds" both micro-cantilevers 11, 12, and the lock-in circuit 53 detects the output oscillation frequencies of both micro-cantilevers, thereby providing a signal depending on the comparison of these two frequencies and the reference excitation signal.

By considering the device 1 as comprising a double MEMS/NEMS oscillator, it can be understood how a plurality of pressure detection methodologies can be applied. In fact. the device can be configured to detect the pressure based on one or more characteristics of the electrical signals S₁ and S_{ref}: for example, based on a variation in the oscillation frequency relative to a nominal or forcing frequency; or based on a broadening of the oscillation peak, as visible in the spectrum of each electrical signal; or further by measuring the Q factor thereof. To this purpose, it is possible to use, for example, known methodologies and correlations for the operation of micro-cantilever oscillators, among which those reported in Hosaka et al., "Damping characteristics of beam-shaped micro-oscillators", Sensors and Actuators A 49 (1995), 87-95, may be cited for example.

According to different particular exemplary embodiments, the micro-cantilevers 11, 12 of the first and second sensor members are configured to oscillate in a parallel direction or in a perpendicular direction relative to the surface of the chip 40 composing the device.

The role of the reference sensor 12, within the operating procedures of the device 1, will be described in a following part of the description.

The ionization-based detection member 19 is now considered in greater detail. It should be noted that such ionization-based detection member 19 can be considered, in some aspects, as a miniaturized and optimized mass spectrometer, in terms that will be better described herein below.

According to an implementation example, the above-mentioned ionization region 20 contains gas particles, whose pressure is to be measured, and is arranged in such a way to be crossed by ionization particles generated by the source 21, so that the ionization particles ionize the gas particles, thereby generating respective ions.

The above-mentioned ion extraction means 22 are configured to determine a preferred trajectory for the generated ions, within the ionization region 20, towards at least one ion extraction window 31.

The above-mentioned at least one ion detector 23 has micrometric dimensions and is arranged at the respective at least one ion extraction window 31, such as to be shielded against trajectories of X-rays generated by impacts of the ionizing electrons with parts of the ionization region 20 other than the ion detector 23.

According to an implementation example, the ionization source 21 comprises at least one electron emission source. This source can be for example an "El (Electron Ionization) Smart" source, particularly a "cold" field-effect emission source, such as a nano-tubes and/or micro-tips source; the "cold" emission source increases the ionization efficiency even at extremely low pressures. In other exemplary options, the ionization source can be a plasma (o glow) source, or a chemical ionization (CI) source, or another source, *per-se* known, suitable to cause particle ionization according to one of the known ionization methods.

The ionization region 20 can be described as a "chamber" of microscopic dimensions, for example, parallelepiped shaped with sidewalls forming a grid 30 on which the electrons can collide and recombine. At one of the sidewalls, the ionization source 21 can be arranged, emitting particles (for example electrons) that are capable to ionize the gas particles in the "chamber", which electrons travel in an almost straight direction towards the opposite wall (grid).

The ion extraction means 22 are configured to generate suitable electromagnetic fields, such as to extract the ionized, thus charged, particles from inside the chamber and drive them, by means of electromagnetic interaction, along a desired trajectory, or preferential trajectory, passing through one or more preset exit points, where the above-mentioned one or more "extraction windows" 31 are arranged.

In different implementation examples, the extraction windows 31 can be at different points in the ionization region 20 grid.

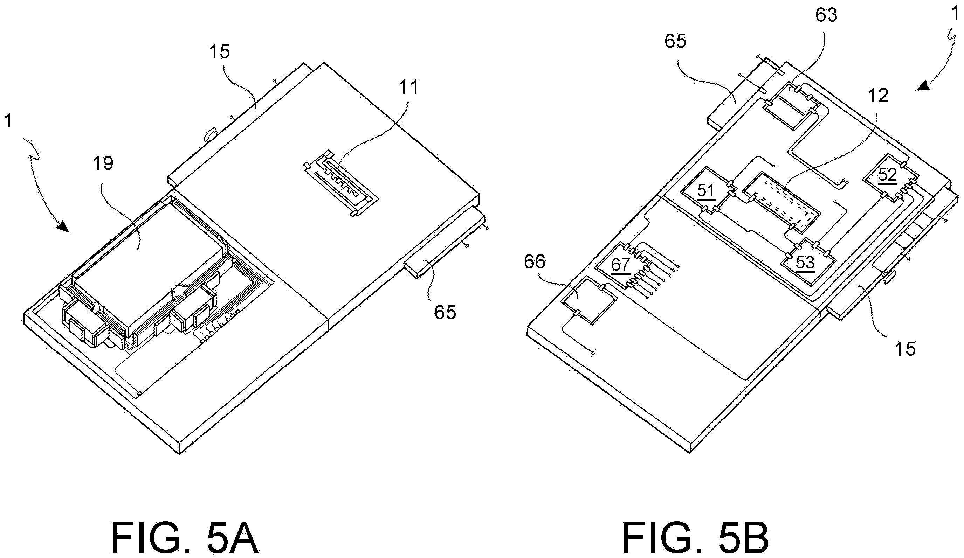

Advantageously (as shown in Fig. 5), the extraction windows can be placed, for example, at the walls that are perpendicular relative to the wall where the ionization source 21 is located, such as to determine ion exit trajectories that are 90°-angled with respect to the electron path 33.

Other embodiments are possible, wherein the exit trajectory is 180°-angled or inclined at a different angle, relative to the electron path (see for example Figs. 2 and 3).

According to different implementation examples included in the invention, the ion extraction means 22 can be made by means of one or more ion guides 22.

Particularly, according to some implementation variants, such ion guides 22 can consist of ion extraction nozzles 22 and/or electrostatic lenses 22 and/or electrostatic sectors and/or magnetic sectors.

More particularly, the ion guides 22 can be implemented by means of a quadrupole mass filter without bias, *per-se* known (as will be illustrated below), or by means of a radiofrequency hexapole or octupole or by an electrical or magnetic sector.

Each of the one or more ions detectors 23 can be implemented by means of a *per-se* known detector, which is sensitive to ions colliding on its surface, and configured to generate the above-mentioned second electrical signal S₂ (typically, an electrical current) proportional to the number of colliding ions. Since the number of colliding ions is proportional to the concentration of ions present in the ionization region 20, which is in turn proportional to the number of gas particles present in the ionization region 20, and thus to the pressure, it is concluded that the second electrical signal S₂ generated by the ion detector 23 is representative, with great precision, of the pressure inside the ionization region.

Particularly, the ion detector 23 can be implemented by employing, on a miniaturized scale, principles used for example in known detectors of the Faraday cup, or SEM, or Channeltron types.

As already remarked above, the ion detector 23 has micrometric dimensions, i.e., dimensions having a micrometric or sub-millimetric order of magnitude. More specifically, the ion detector 23 has an impact surface whose sides (if it has a square or polygonal shape) or whose radius (if it has a circular shape) are of the order of magnitude of tens or hundreds µm (micron) - and anyway sub-millimetric (e.g., about 100 µm) - such that the area of the impact surface is of a micrometric order of magnitude, i.e., less than one mm².

It should be noted that the structure of the ionization-based detection member 19 described above allows to drastically reduce, up to almost cancel, the undesired effects due to the X-rays generated in the ionization region 20 when the electrons emitted by the source recombine on the grid 30. When such X-rays collide on the one or more ion detectors 23, they generate a spurious signal (for example, a spurious electrical current) which disturbs the correct signal (representative of the number of detected ions and thus of the pressure), generates noise, and finally reduces the instrument sensitivity.

The drawbacks related to the X-rays can be reduced by means of each of the different aspect of the device described herein.

Firstly, each of the one or more ion detectors 23 is arranged outside the ionization region 20, i.e., beyond the grids 30 defining the same, and is connected to the same only by means of the one or more respective extraction windows 31, through which the ions to be detected pass. This implies that only the minimal X-rays fraction passing through these windows (and not the totality of X-rays present in the ionization region) hits the ion detector: thus, the spurious signal generated by the X-rays and the consequent interference is reduced to a corresponding fraction. The aspect noted above is made possible by the fact that the ions can be extracted from the ionization region 20, using any geometry or angle, as shown above.

Secondly, each of the ion detectors 23 has micrometric dimensions, and the reduction of the impact surface causes a proportional reduction of the amount of impacting X-rays.

Thirdly, according to a particular implementation option, the ion extraction means 22 further comprise X-rays radiations shielding means, configured to shield the at least one ion detector with respect to X-rays, such as to reduce its exposure to X-rays. Such shielding means can be for example the same extraction lenses 22, or specifically arranged shielding nozzles.

According to an exemplary embodiment, the device 1 further comprises magnetic field generation means 32 (for example, a magnet, or a ferromagnetic material member), configured to generate a magnetic field such as to affect the trajectory of the ionizing electrons in a desired way. For example, this trajectory can be made helicoidal.

The role of the reference sensor 12, enclosed in the sealing and protective casing 13, will be now considered. According to an exemplary implementation, the casing 13 is configured to adopt a closed state and an open state: in the closed state, it protects the at least one second sensor member 12 from being directly exposed to the surrounding environment; in the open state, it allows the at least one second sensor member to be directly exposed to the surrounding environment.

When the casing 13 is closed and sealed, it encloses the second sensor member 12, thus protecting it from degradation phenomena possibly resulting from environmental conditions, and at the same time keeping fixed pressure conditions, stabilized on a known value (the above-mentioned "reference pressure" value P_{ref}) which is a certain and absolute reference point defined *a priori.* Thereby, the second sensor member 12 keeps the "nominal behaviour", for which it has been carefully characterized *a priori,* with a good or excellent accuracy. Thus, the second sensor member takes the important function of "reference sensor", having a stable and anyway predictable behaviour, even during operation.

In greater detail, all the electro-mechanical or mechatronic properties of the second reference sensor member 12 are known, since they have been characterized *a priori* with respect to the reference pressure, for example, as a function of operating temperature, oscillation frequency, oscillation amplitude, and so on; and they have been further stored in a memory included in the electronic processing means 10.

From a mathematical point of view, the characterization data of the reference sensor 12 actually define a "reference hypersurface" allowing to know exactly the mechatronic properties of the sensor member and the operating conditions (for example, operating temperature), based on the reference electrical signal S_{ref} generated by the reference sensor 12, and being known the reference pressure to which it is subjected inside the sealed casing.

Therefore, when the processing means 10 receive an electrical signal S_{ref} from the reference sensor 12, they refer it to the known reference pressure value P_{ref}, as maintained inside the sealed casing 13, and thus, based on the stored characterization data, the processing means 10 can know both the mechatronic properties and the operating conditions of the reference sensor 12. Consequently, the processing means 10 are also able to calculate the exact conversion factor existing between S_{ref} and P_{ref} (which will be herein designated as "reference conversion factor").

It should be noted that the operating conditions of the reference sensor 12 are essentially the same conditions, except for the pressure, that are undergone by the first electro-mechanic sensor member 11 and by the ionization-based detection member 19, which members are very close to each other in the device 1.

Thus, when the first electro-mechanic sensor member 11 is active, the processing means 10 are able to calculate a suitable conversion factor (which will be herein designated as "first conversion factor", or "first calibration factor") to be applied to the signal S₁ generated by the first sensor member 11, in order to calculate exactly the pressure value P to which the first sensor member 11, thus the device 1, is subjected, i.e., the value to be measured.

Similarly, when the ionization-based detection member 19 is active, the processing means 10 are able to calculate another suitable conversion factor (which will be herein designated "second conversion factor" or "second calibration factor") to be applied to the signal S₂ generated by the ionization-based detection member 19, in order to calculate exactly the pressure value P to which this detection member 19, thus the device 1, is subjected, i.e., the value to be measured.

The first and second conversion factors are indeed correlated in a deterministic and known manner (because of the initial characterization) to the reference conversion factor.

Briefly, due to the fact of receiving information both from the reference sensor 12, on one hand, and from the first sensor member 11 or from the ionization-based detection member 19, on the other hand, the processing means 10 are capable in any case to estimate more accurately the actual pressure present at the device, i.e., the measured pressure P, taking into account both the reference electrical signal S_{ref}, on one hand, and the first S₁ or second S₂ electrical signals, on the other hand.

It should be also noted that, according to an implementation option, the device includes a plurality of reference sensor members 12 to detect a respective plurality of reference pressure values P_{ref}, and the electronic processing means 10 are further configured to generate the measured pressure value P based on a processing of the detected reference pressure values P_{ref}. The plurality of "reference sensors" can be exploited both to improve the estimate precision and for the sake of redundancy and reliability.

The operation described above is carried out both upon activation of the device 1 and during the normal operating cycle; thus, such operation actually carries out an "initial self-calibration" and a "running calibration" procedure, which the device is able to perform.

Moreover, according to a further implementation example, the electronic processing means 10 are configured to process data received from the first sensor member 11 or from the detection member 19, on the one side, and by the reference sensor 12, on the other side. The electronic processing means 10 are further configured, based on the received data, to carry out a diagnostic procedure on the first sensor member 11, such as to identify potential hysteresis phenomena and/or imperfections and/or potential thermal and/or mechanical drifts which the first sensor member is subject to, and/or a diagnostic procedure of the ionization-based detection member 19, such as to identify possible performances degradation phenomena which the ionization-based detection member is subject to.

More precisely, when the pressure existing in the environment of the device is known, and is equal to the reference pressure, the signals S₁ or S₂, on the one side, and the reference signal S_{ref}, on the other side, are compared.

In this case, if the difference between the reference signal S_{ref} and the electrical signal S₁ (or S₂ depending on the case) is a relatively small quantity, less than a preset threshold, it means that the first sensor member 11 (or the ionization-based detection member 19, respectively) works well, and diagnostics have a positive outcome; possibly, the detected difference is compensated by acting on the above-mentioned first conversion factor (or second conversion factor, respectively), in a way similar to what described above about the calibration.

On the other hand, if the difference between the reference signal S_{ref} and the electrical signal S₁ (or S₂ depending on the case) is a relatively significant quantity, for example larger than the above-mentioned threshold, diagnostics have a negative outcome, and a mere calibration compensation is not sufficient anymore.

According to an implementation example, the device 1 is capable to carry out a diagnostic procedure even if the pressure of the external environment is not known, or if it does not coincide with the reference pressure, as long as this pressure is within the operation range of the reference sensor 12. In this example, the casing 13 is temporarily opened, such as to temporarily expose the second sensor member 12 to the same environment to which the first sensor member 11 and the ionization-based detection member 19 are exposed. Then, the diagnostic procedure is performed, and finally the casing 13 is closed and sealed again and the reference pressure conditions are restored, for example by means of an embedded "getter".

In case a plurality of second sensor members 12 are provided, it is possible to keep one of them always closed and sealed, under reference pressure conditions.

In case the diagnostic yields a negative outcome, according to a further exemplary option, the electronic processing means 10 are further configured to carry out an adjusting procedure of the device 1, based on the results of said diagnostic procedure. This adjustment procedure includes an adjusting and/or compensation and/or optimization procedure of the first sensor member 11, to correct and/or compensate hysteresis phenomena and/or imperfections and/or identified drifts, and also an adjusting and/or compensation and/or optimization procedure on the ionization-based detection member to correct and/or compensate performance degradation phenomena.

It should be noted that, in other implementation examples, the adjustment can be performed also based on optimization procedures directly operating on the electrical/electronic variables on which the detection mechanism is based.

The advantage of having available in the device 1a diagnostic procedure, which is actually a "self-diagnostic", is evident. The further advantage of having available the consequent adjusting (or recalibration) procedure, which is actually a "self-adjusting", is also evident.

Only if even this "self-adjusting" procedure fails to restore proper operating conditions, a failure signal is sent from the electronic processing means 10 towards the higher level system controllers.

In order to allow the adjusting procedure, the device 1 further comprises controlled heating means, comprising one or more temperature sensors 61, e.g., miniaturized thermometer(s), and at least one heating member 62 (for example, one or more micro-resistors), placed near and/or over the first sensor member 11 and the ionization-based detection member 19, and a heat supply (or "heater") 63. The heating member 62 is configured to carry out a degassing and/or a removal of gases adsorbed on the surface of the micro-cantilever 11 of the first sensor member 11, and in suitable portions of the ionization-based detection member 19. This is done under the control of the electronic processing means 10, which in turn operate based on the temperature detected by the thermometer 61 and on the results of the diagnostic procedure.

In this case, the above-mentioned adjusting procedure of the first sensor member 11 comprises the degassing and/or removal of gases adsorbed on the micro-cantilever 11 surface, by means of the controlled heating means. The above-mentioned adjusting procedure of the ionization-based detection member 19 comprises the degassing and/or removal of gases adsorbed in portions of the ionization-based detection member 19, by means of the controlled heating means.

It should be noticed that the above-mentioned heat supply 63 can be used to vary the operating thermal conditions of the device, in a controlled manner, also in operating steps other than self-adjusting.

According to an exemplary implementation, the device 1 further comprises specific protection technical thin films configured to reduce the adsorption of the process gases (for example, hydrophobic films to prevent the adsorption of moisture present in the process environment) and to prevent corrosion phenomena. These protection thin films are arranged such as to cover at least the first sensor member 11 and the ionization-based detection member 19.

According to a further exemplary embodiment, the device further comprises a package 80 comprising micrometric frame filters, and/or anti-particulate filters, arranged such as to cover at least the sensor members 11, 12, and the ionization-based detection member 19 included in the device 1, and configured to protect them from particulate or soot. This option is particularly advantageous when the device 1 is intended to be used in industrial environments.

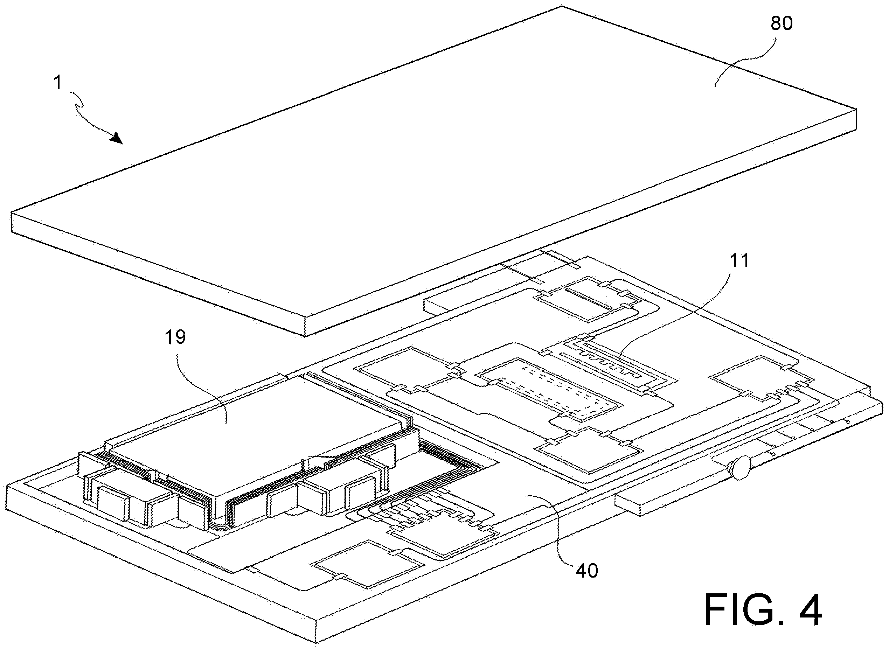

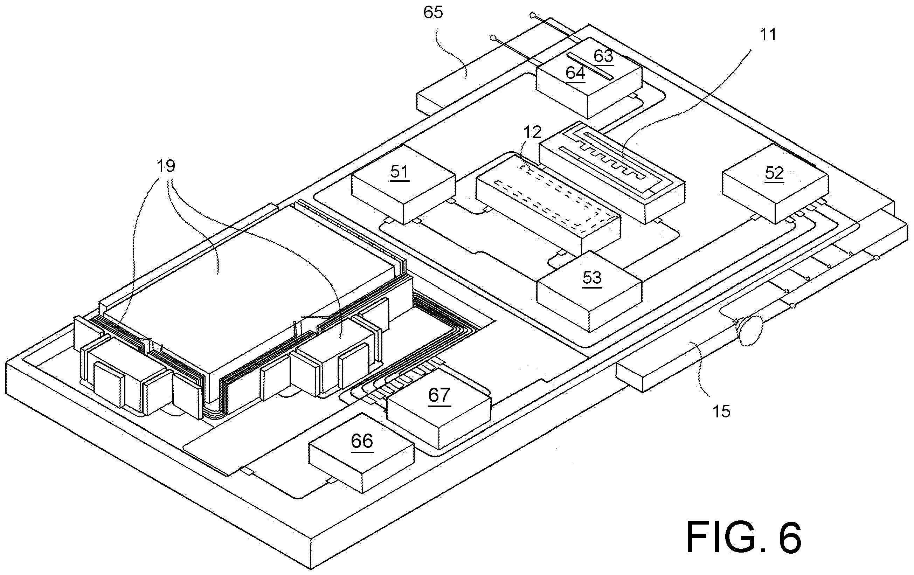

The example described here is shown in the exploded view of Fig. 4, with reference to an embodiment of the device 1, but it can be also applied in embodiments illustrated in Figs. 5A, 5B and 6.

According to an implementation option, the electronic processing means 10 comprise at least one electronic processor (CPU) 52 integrated in the device 1. This CPU can then operate as an embedded on-chip programmable microprocessor.

According to an implementation example, the interface means 15 comprise input and output means, wireless or wired and/or with pins. As a whole, this interface can interact with the external world (for example with an external plant control system) in a versatile and adaptable manner, both to transmit and to receive information and/or signals and/or commands.

According to an implementation option, the interface means 15 comprise both wired input means 71 and a wireless transmitter 70 (for example a WiFi transmitter), to remotely transmit signals from closed operation areas (such as pump internal zones, process and measurement systems), and output pins 72 able to provide for example an direct analog output signal and/or a digital TTL output signal and/or an interface for a serial communication protocol.

The presence of a CPU 52 and of an interface 15, integrated in the device, allows the device 1 to receive and send information (for example, control signals) from and to a higher-level control system, for example the operative plant/environment control system where the device operates. Thereby, the device 1 is completely integrated in the operative plant/environment.

According to an exemplary implementation option, the device 1 comprises further integrated electronic circuitry, comprising one or more of the following electronics circuits: dedicated I/O management circuits, a supply and management circuit 64 (connected to an external supply interface 65) of the heating member, a management circuit 67 of the detection member (comprising a voltage supply connected to the ionization-based detection member 19 parts that require to be kept to controllable voltages), a processing circuit 66 of the signal coming from the at least one ion detector 23 of the detection member (comprising *inter alia* a current/voltage converter).

Several "auxiliary" electronic circuits, optionally present in the device 1 (frequency generator 51, lock-in circuit 52, heater 53, dedicated I/O management circuits, management circuits 67 of the detection member, etc.) have been illustrated above. These auxiliary electronic circuits are integrated in the device 1. Optionally, they can be made in the same chip containing the sensor members, the processing means and the interface means, or in further chips, micro-connected to the above-mentioned main chip, such as to constitute the integrated device.

Referring to the structural aspects of the device, particularly to the case where it comprises one chip only, three different embodiments are illustrated in Figs. 3, 5A-5B and 6 by way of example. These different embodiments share all the components and the structural aspects previously described, and therefore they are illustrated using the same numerical references.

The embodiments differ in the way the components are arranged in the device, particularly in the single chip 40 comprised in the device.

In the embodiment illustrated in Fig. 3, the first 11 and second 12 sensor members and the ionization-based detection member 19, as well as said electronic processing means 10, are arranged on a same side of the chip constituting the device.

In another embodiment, the first sensor member 11 and the detection member 19 are arranged on one side of the chip, while the electronic processing means 10 (and optionally the reference sensor member 12) are arranged on the other side of the chip forming the device. This is illustrated in Fig. 5A (showing one side of the chip) and 5B (showing the other side of the chip).

Such embodiment offers the advantage of segregating the heating members with respect to the other components of the device, reducing the heat dissipation issues. Moreover, the other components are placed on the side of chip 40 faced towards higher pressure or atmospheric pressure, such as they can be more easily cooled.

In the embodiment illustrated in Fig. 6, the first 11 and second 12 sensor members, the ionization-based detection member 19, and the electronic processing means 10 are arranged such as to project as a relief, on different planes, with respect to the surface of the chip 40 composing the device.

Further embodiments, also included in the invention, can be made by arranging the above-mentioned members of the device in any combination on either side of the chip 40.

As already remarked, the device 1 described above is able to detect pressure values between 10⁻¹³ mbar and 10⁴ mbar, wherein the first pressure sub-range comprises for example pressures between 10⁻⁴ mbar and 10⁴ mbar and the second pressure sub-range comprises for example pressures between 10⁻¹³ mbar and 10⁻⁴ mbar.

Now, it will be considered the case wherein the device 1 detects very low level pressures, and, in these conditions, it is desired to perform a Gas Analysis or Residual Gas Analysis function.

For this purpose, according to one embodiment, the device 1 is configured to provide also partial pressure measurements of several gases possibly present in the rarefied air contacting the ionization-based detection member 19.

In this embodiment, the ionization-based detection member 19 comprises at least one ion selective filtering member, which is configured to shield the at least one ion detector from all the ions but one respective selected ion, in such a way that the at least one ion detector measures the partial pressure related to such selected ion.

According to an exemplary implementation, the filtering member is a filtering member that can be tuned to select and sequentially send different types of ions on a same ion detector, so that such ion detector sequentially measures the partial pressure of the different selected ions, such as to perform a Gas Analysis or Residual Gas Analysis function.

According to one particular implementation option, the ionization-based detection member 19 comprises a plurality of additional ion detectors to detect a respective plurality of ions. The plurality of additional ion detectors can be coupled with a respective plurality of ion selective filtering members, or with only one, each of them being configured to shield the respective ion detector from all the ions but a respective selected ion, so that the device operates both as a meter of total pressure, and as a meter of partial pressure related to each one of the plurality of selected ions, thereby performing a Gas Analysis or Residual Gas Analysis function.

In a particular implementation example, each of the at least one ion selective filtering member comprises a quadrupole mass filter, according to operation principles *per-se* known (described for example in Reinhard - von Zahn, "Das elektrische Massenfilter als Massenspektrometer und Isotopentrenner" Zs. Physik, 152, (1958), 143-182; or in Greaves, "Vacuum mass spectrometry", Vacuum, 20, (1970), 65-74).

In other implementation examples, the filtering member comprises electrical sectors and/or magnetic sectors.

In other terms, the device 1, based on the basic structure illustrated at the beginning of this description, can be advantageously adapted such as to also become a device for performing Gas Analysis or Residual Gas Analysis, substantially operating on the ion extraction means 23, and applying theories *per-se* known in the mass spectrometry field.

The above-mentioned filter members, when made by means of quadrupole filters, are driven by voltages, having different amplitudes and waveforms, for example having a DC amplitude value U, and/or a superimposed oscillation amplitude value V and a superimposed oscillation frequency ω. By operating on these variables, for example, different trajectories or speeds can be imposed, in a controlled manner, to the various kinds of ions, mainly depending on their mass.

Thus, it is possible make sure that only a desired type of ions, or any subset of ions, or all the ions, once extracted through the extraction windows 31, have a trajectory allowing them to collide on the ion detectors 23. In this way, it is possible to obtain, in a controlled manner, according to what is desired, total pressure measurements, partial pressure of each of different ions, and Gas Analysis or Residual Gas Analysis.

Moreover, by varying the above-mentioned electrical variables V, U, ω in a controlled and desired manner over time, it is possible to carry out sequentially a series of different measurements, thus progressively tuning the device to measure ions of different type and mass.

A method for measuring pressure over a very wide pressure range, carried out by means of a device 1 according to the invention, is now described.

This method comprises the steps of automatically detecting an operative pressure measurement range, by electronic means 10 of the device 1, based on a sequential turning on of a first sensor member 11 of the device 1, configured to measure pressures within a first sub-range, and of a ionization-based detection member 19 of the device 1, configured to measure pressures within a second sub-range.

If the detected operative range is the first sub-range, then the method comprises the step of detecting a first pressure value P₁ and generating a first electrical signal S₁ representative of the first pressure value P₁, by the first sensor member 11 of the device 1.

On the other hand, if the detected operative range is the second sub-range, the method comprises the step of detecting a second pressure value P₂ and generating a second electrical signal S₂ representative of the second pressure value P₂, by the ionization-based detection member 19.

The method then comprises the step of determining, by the electronic processing means 10, a measured pressure value P based on the above-mentioned first or second electrical signals, S₁ and S₂; and finally of providing in output the measured pressure value P,, by the interface means 15 of the device 1.

The above-mentioned first sensor member 11, ionization-based detection member 19, electronic processing means 10 and interface means 15 are included in an single integrated device.

According to an exemplary implementation, the method further comprises the steps of storing, in the electronic processing means 10, characterization data of at least a further reference sensor member 12 of the device 1, at a reference pressure P₂; then, maintaining the further reference sensor member 12 at the reference pressure P₂, inside a casing 13; calibrating the first sensor member 11, the ionization-based detection member 19 and the further reference sensor member 12, by means of the electronic processing means 10, based on a reference electrical signal S_{ref} generated by the reference sensor member 12 and based on the above-mentioned characterization data.

As it can be seen, the object of the present invention is achieved by the system described above, by virtue of the illustrated characteristics.

First of all, from what has been described above, it is apparent that the device of the present invention is a miniaturized device capable of maintaining high precision and reliability performances, and moreover capable of measuring pressures within a very wide range of at least 18 orders of magnitude, from 10⁻¹³ mbar to 10⁴ mbar, thus becoming an almost universal single device for pressure measurements.

It is also important to observe that, due to the structural and functional characteristics of the device, it proves to be self-contained, because it is capable of self-calibration and self-diagnostics. The device is able to deal with, and correct to a certain extent, the several degradation causes which may actually arise and which would worsen the device performances, by affecting the sensor members.

Moreover, the device allows, as illustrated above, to manage microscopic signals at microscopic level, with the consequent further advantage of improving the achievable signal-to-noise ratios.

Finally, as described above, the device of the invention allows advantageously to obtain both total pressure measurements and partial pressure measurements, in low and very low pressure conditions, and to also perform Gas Analysis or Residual Gas Analysis functions.

## Claims

1. A miniaturized device (1) for pressure measurements over a very wide range, comprising:
- at least one first electro-mechanical miniaturized sensor member (11) configured to detect a respective first pressure value (P₁) and generate a first electrical signal (S₁) representative of the first pressure value (P₁);
- an ionization-based detection member (19), configured to detect a second pressure value (P₂), said ionization-based detection member (19) comprising at least one ionization source (21), an ionization region (20), ion extraction means (22), and at least one ion detector (23), configured to detect ions and generate a second electrical signal (S₂) depending on the amount of ions detected and representative of the second pressure value (P₂);
- electronic processing means (10), operatively connected to said first sensor member (11) and ionization-based detection member (19), and configured to determine a measured pressure value P based on said first (S₁) and second (S₂) detected electrical signals;
- interface means (15), operatively connected to said electronic processing means (10) and configured to provide in output said measured pressure value (P),
wherein said first sensor member (11), ionization-based detection member (19), electronic processing means (10) and interface means (15) are comprised in a single integrated device, manufactured by means of integrated micro/nano-electronic techniques and contained, or containable, in a single, individual package;
wherein the device further comprises at least one further miniaturized reference pressure sensor member (12), arranged within a respective casing (13), suitable to seal said reference sensor member (12), and configured to detect a reference pressure value (P_{ref}) and to generate a reference electrical signal (S_{ref}), representative of the reference pressure value (P_{ref});
wherein the electronic processing means (10) comprise a memory, configured to store characterization data characterizing the reference sensor member (12) at the reference pressure (P_{ref});
wherein the electronic processing means (10) are further connected with said reference sensor member (12) to receive the reference electrical signal (S_{ref}), and are configured to calibrate the first sensor member (11), the ionization-based detection member (19) and the reference sensor member (12) based on the reference electrical signal (S_{ref}) and the stored characterization data;
wherein the electronic processing means (10) are further configured to process the data received from the reference sensor member (12), and to carry out, based on said received data:
- a diagnostic procedure of the ionization-based detection member (19), so as to identify possible performance degradation phenomena to which the ionization-based
detection member (19) is subjected, and
- a diagnostic procedure of the first sensor member (11), so as to identify possible hysteresis phenomena and/or imperfections and/or possible thermal and/or mechanical drifts to which the first sensor member (11) is subjected.

2. The device (1) according to claim 1, wherein the range of measurable pressures is divided into two measurement sub-ranges, and wherein the electronic processing means (10) are configured to generate the measured pressure value as coincident with the detected first or second pressure values, based on the first (S₁) or second (S₂) electrical signals, respectively, depending on the fact that the pressure to be measured belongs to one or the other one of the measurement sub-ranges.

3. The device (1) according to claim 2, wherein the electronic processing means (10) are configured to automatically detect the measurement sub-range, based on a sequential turning on of the device starting from the first sensor member (11).

4. The device (1) according to any of the preceding claims, wherein said first sensor member (11), ionization-based detection member (19), electronic processing means (10) and interface means (15) are comprised in a single chip (40) of the integrated device.

5. The device (1) according to claim 1, wherein each of said first sensor member (11) and reference sensor (12) comprises a respective oscillating member of the MEMS/NEMS type, configured to oscillate with a dynamic response that depends on the pressure to which it is subjected.

6. The device (1) according to any of the preceding claims, wherein the ionization region (20) of the ionization-based detection member (19) contains gas particles the pressure of which has to be measured, and it is arranged so as to be passed through by ionization particles generated by the source (21), so that the ionization particles ionize the gas particles, generating respective ions;
and wherein the ion extraction means (22) are configured to determine a preferential trajectory for the generated ions, passing through at least one ion extraction window (31), through which the ions leave the ionization region (20);
and wherein the at least one ion detector (23) has micrometer dimensions, and it is arranged respectively at said at least one ion extraction window (31), so as to be shielded against trajectories of X rays generated by impacts of the ionizing electrons with parts of the ionization region (20) other than the at least one ion detector (23).

7. The device (1) according to claim 7, wherein said ion extraction means (23) further comprise X-ray radiation shielding means, configured to shield the at least one ion detector (23) against said X rays, so as to reduce the exposure thereof to X rays,
or said ion extraction means (22) further comprise at least one ion guide (22).

8. The device (1) according to claim 1, wherein the electronic processing means (10) are configured to carry out, in the case that the diagnostic procedure yields a negative outcome:
- an adjustment and/or compensation and/or optimization procedure of the first sensor member (11) to correct and/or compensate identified hysteresis phenomena and/or imperfections and/or drifts, based on the results of said diagnostic procedure;
- an adjustment and/or compensation and/or optimization procedure on the ionization-based detection member (19) to correct and/or compensate performance degradation phenomena, that are identified based on the results of said diagnostic procedure.

9. The device (1) according to any of the preceding claims, further comprising protection thin films, configured to reduce the adsorption of processing gases and to prevent corrosion phenomena, and arranged so as to cover at least the first sensor member (11) and the ionization-based detection member (19),
or further comprising a package (80) comprising micrometer frame filters, arranged so as to cover at least the first sensor member (11) and the ionization-based detection member (19).

10. The device (1) according to any of the preceding claims, configured to detect pressure values ranging between 10⁻¹³ mbar and 10⁴ mbar, wherein the first sub-range of pressures comprises pressures between 10⁻⁴ mbar and 10⁴ mbar, detectable by means of the first electro-mechanical miniaturized sensor member (11), and the second sub-range of pressures comprises pressures between 10⁻¹³ mbar and 10⁻⁴ mbar, detectable by means of the ionization-based detection member (19).

11. The device (1) according to any of the preceding claims, wherein the ionization-based detection member (19) comprises at least one selective ion filtering member, configured to shield the at least one ion detector (23) against all the ions except for a respective selected ion, so that the at least one ion detector (23) measures the partial pressure relative to said selected ion.

12. The device (1) according to claim 11, wherein the filtering member is a filtering member tunable to select and send in sequence ions of different types on a same ion detector (23), so that said ion detector (23) measures in sequence the partial pressure and/or concentration of the different ions selected.

13. The device (1) according to claim 12, wherein the ionization-based detection member (19) comprises a plurality of additional ion detectors (23) to detect a respective plurality of ions, the plurality of additional ion detectors (23) being coupled to a respective plurality of said selective ion filtering members, each of said selective ion filtering members being configured to shield the respective ion detector (23) against all the ions except for a respective selected ion, so that the device (1) acts both as a meter of total pressure, and as a meter of partial pressure and/or concentration relative to each of the plurality of the selected ions.

14. Method for measuring pressure over a very wide range, by a miniaturized device (1), the method comprising the steps of:
- automatically detecting an operative pressure measurement range, by electronic means (10) of the device (1), based on a sequential turning on of a first sensor member (11) of the device (1), configured to measure pressures in a first sub-range, and of an ionization-based detection member (19) of the device (1), configured to measure pressures in a second sub-range;
- if the detected operative sub-range is the first sub-range, detecting a first pressure value (P₁) and generating a first electrical signal (S₁) representative of the first pressure value (P₁), by the first sensor member (11);
- if the detected operative sub-range is the second sub-range, detecting a second pressure value (P₂) and generating a second electrical signal (S₂) representative of the second pressure value (P₂), by the ionization-based detection member (19);
- determining, by the electronic processing means (10), a measured pressure value (P) based on said first (S₁) or second (S₂) electrical signals;
- providing in output the measured pressure value (P), by interface means (15) of the device (1);
said first sensor member (11), ionization-based detection member (19), electronic processing means (10) and interface means (15) being comprised in a single integrated device, manufactured by means of integrated micro/nano-electronic techniques and contained, or containable, in a single, individual package;
wherein the method further comprises:
- detecting a reference pressure value (P_{ref}) and generating a reference electrical signal (S_{ref}), representative of the reference pressure value (P_{ref}), by means of at least one further miniaturized reference pressure sensor member (12), arranged within a respective casing (13), suitable to seal said reference sensor member (12);
- calibrating the first sensor member (11), the ionization-based detection member (19) and the reference sensor member (12), by means of the electronic processing means (10), based on the reference electrical signal (S_{ref}) and on characterization data characterizing the reference sensor member (12) at the reference pressure (P_{ref}), stored in a memory of the electronic processing means (10);
- carrying out, by the electronic processing means (10), based on data received from the reference sensor member (12), and to carry out:
- a diagnostic procedure of the ionization-based detection member (19), so as to identify possible performance degradation phenomena to which the ionization-based
detection member (19) is subjected, and
- a diagnostic procedure of the first sensor member (11), so as to identify possible hysteresis phenomena and/or imperfections and/or possible thermal and/or mechanical drifts to which the first sensor member (11) is subjected..

## Patentansprüche

1. Miniaturisierte Vorrichtung (1) für Druckmessungen über einen sehr breiten Bereich, umfassend:
- wenigstens ein erstes elektromechanisches miniaturisiertes Sensorelement (11), welches dazu eingerichtet ist, einen jeweiligen ersten Druckwert (P₁) zu erfassen und ein erstes elektrisches Signal (S₁) zu erzeugen, welches den ersten Druckwert (P₁) repräsentiert;
- ein ionisationsbasiertes Erfassungselement (19), welches dazu eingerichtet ist, einen zweiten Druckwert (P₂) zu erfassen, wobei das ionisationsbasierte Erfassungselement (19) wenigstens eine lonisationsquelle (21), einen lonisationsbereich (20), Ionen-Extraktionsmittel (22) und wenigstens einen lonendetektor (23) umfasst, welcher dazu eingerichtet ist, Ionen zu erfassen und ein zweites elektrisches Signal (S₂) zu erzeugen, welches von der Menge von erfassten Ionen abhängt und den zweiten Druckwert (P₂) repräsentiert;
- elektronische Verarbeitungsmittel (10), welche mit dem ersten Sensorelement (11) und dem ionisationsbasierten Erfassungselement (19) betriebsmäßig verbunden sind und dazu eingerichtet sind, einen gemessenen Druckwert P auf Grundlage des ersten (S₁) und des zweiten (S₂) erfassten elektrischen Signals zu bestimmen;
- Schnittstellenmittel (15), welche mit den elektronischen Verarbeitungsmitteln (10) betriebsmäßig verbunden sind und dazu eingerichtet sind, als Ausgabe den gemessenen Druckwert (P) bereitzustellen,
wobei das erste Sensorelement (11), das ionisationsbasierte Erfassungselement (19), die elektronischen Verarbeitungsmittel (10) und die Schnittstellenmittel (15) in einer einzelnen integrierten Vorrichtung umfasst sind, welche mittels integrierter mikro-/nanoelektronischer Techniken hergestellt sind und in einer einzelnen individuellen Verpackung enthalten oder enthaltbar sind;
wobei die Vorrichtung ferner wenigstens ein weiteres miniaturisiertes Referenzdruck-Sensorelement (12) umfasst, welches innerhalb eines jeweiligen Gehäuses (13) angeordnet ist, welches dazu geeignet ist, das Referenz-Sensorelement (12) abzudichten, und dazu eingerichtet ist, einen Referenzdruckwert (P_{ref}) zu erfassen und ein elektrisches Referenzsignal (S_{ref}) zu erzeugen, welches den Referenzdruckwert (P_{ref}) repräsentiert;
wobei die elektronischen Verarbeitungsmittel (10) einen Speicher umfassen, welcher dazu eingerichtet ist, Charakterisierungsdaten zu speichern, welche das Referenz-Sensorelement (12) bei dem Referenzdruck (P_{ref}) charakterisieren;
wobei die elektronischen Verarbeitungsmittel (10) ferner mit dem Referenz-Sensorelement (12) verbunden sind, um das elektrische Referenzsignal (S_{ref}) zu empfangen, und dazu eingerichtet sind, das erste Sensorelement (11), das ionisationsbasierte Erfassungselement (19) und das Referenz-Sensorelement (12) auf Grundlage des elektrischen Referenzsignals (S_{ref}) und der gespeicherten Charakterisierungsdaten zu kalibrieren;
wobei die elektronischen Verarbeitungsmittel (10) ferner dazu eingerichtet sind, die von dem Referenz-Sensorelement (12) empfangenen Daten zu verarbeiten und auf Grundlage der empfangenen Daten Folgendes auszuführen:
- eine Diagnoseprozedur des ionisationsbasierten Erfassungselements (19), um mögliche Leistungsabnahmephänomene zu identifizieren, welchen das ionisationsbasierte Erfassungselement (19) ausgesetzt ist, und
- eine Diagnoseprozedur des ersten Sensorelements (11), um mögliche Hysterese-Phänomene und/oder Mängel und/oder mögliche thermische und/oder mechanische Abweichungen zu identifizieren, welchen das erste Sensorelement (11) ausgesetzt ist.

2. Vorrichtung (1) nach Anspruch 1, wobei der Bereich von messbaren Drücken in zwei Untermessbereiche unterteilt ist, und wobei die elektronischen Verarbeitungsmittel (10) dazu eingerichtet sind, den gemessenen Druckwert als mit dem erfassten ersten oder zweiten Druckwert auf Grundlage des ersten (S₁) bzw. zweiten (S₂) elektrischen Signals übereinstimmend zu erzeugen, abhängig von der Tatsache, dass der zu messende Druck zu einem oder zu dem anderen der Untermessbereiche gehört.

3. Vorrichtung (1) nach Anspruch 2, wobei die elektronischen Verarbeitungsmittel (10) dazu eingerichtet sind, den Untermessbereich auf Grundlage eines sequenziellen Einschaltens der Vorrichtung, beginnend mit dem ersten Sensorelement (11), automatisch zu erfassen.

4. Vorrichtung (1) nach einem der vorhergehenden Ansprüche, wobei das erste Sensorelement (11), das ionisationsbasierte Erfassungselement (19), die elektronischen Verarbeitungsmittel (10) und die Schnittstellenmittel (15) in einem einzelnen Chip (40) der integrierten Vorrichtung umfasst sind.

5. Vorrichtung (1) nach Anspruch 1, wobei jedes aus dem ersten Sensorelement (11) und dem Referenz-Sensor (12) ein jeweiliges oszillierendes Element des MEMS/NEMS-Typs umfasst, welches dazu eingerichtet ist, mit einer dynamischen Reaktion zu oszillierenden, welche von dem Druck abhängt, welchem es ausgesetzt ist.

6. Vorrichtung (1) nach einem der vorhergehenden Ansprüche, wobei der lonisationsbereich (20) des ionisationsbasierten Erfassungselements (19) Gaspartikel enthält, deren Druck zu messen ist, und er derart angeordnet ist, dass er durch die durch die Quelle (21) erzeugten lonisationspartikel durchtreten wird, so dass die lonisationspartikel die Gaspartikel ionisieren, wobei jeweilige Ionen erzeugt werden;
und wobei die lonen-Extraktionsmittel (22) dazu eingerichtet sind, eine bevorzugte Trajektorie für die erzeugten Ionen zu bestimmen, welche durch wenigstens ein lonen-Extraktionsfenster (31) hindurch treten, durch welches die Ionen den lonisationsbereich (20) verlassen;
und wobei der wenigstens eine lonendetektor (23) Mikrometer-Abmessungen aufweist, und er jeweils an dem wenigstens einen Ionen-Extraktionsfenster (31) angeordnet ist, um gegen Trajektorien von Röntgenstrahlen abgeschirmt zu sein, welche durch Einschläge der ionisierenden Elektronen mit Teilen des lonisationsbereichs (20), abgesehen von dem wenigstens einen lonendetektor (23), erzeugt werden.

7. Vorrichtung (1) nach Anspruch 7, wobei die lonen-Extraktionsmittel (23) ferner Röntgenstrahlungs-Abschirmungsmittel umfassen, welche dazu eingerichtet sind, den wenigstens einen lonendetektor (23) gegen Röntgenstrahlen abzuschirmen, um dessen Ausgesetztsein gegenüber Röntgenstrahlung zu reduzieren,
oder die lonen-Extraktionsmittel (22) ferner wenigstens eine lonenführung (22) umfassen.

8. Vorrichtung (1) nach Anspruch 1, wobei die elektronischen Verarbeitungsmittel (10) dazu eingerichtet sind, in dem Fall, dass die Diagnoseprozedur ein negatives Ergebnis liefert, Folgendes auszuführen:
- eine Anpassungs- und/oder Kompensations- und/oder Optimierungsprozedur des ersten Sensorelements (11), um identifizierte Hysterese-Phänomene und/oder Mängel und/oder Abweichungen auf Grundlage der Ergebnisse der Diagnoseprozedur zu korrigieren und/oder zu kompensieren;
- eine Anpassungs- und/oder Kompensations- und/oder Optimierungsprozedur des ionisationsbasierten Erfassungselements (19), um Leistungsabnahmephänomene zu korrigieren und/oder zu kompensieren, welche auf Grundlage der Ergebnisse der Diagnoseprozedur identifiziert worden sind.

9. Vorrichtung (1) nach einem der vorhergehenden Ansprüche, ferner umfassend dünne Schutzfilme, welche dazu eingerichtet sind, die Adsorption von Verarbeitungsgasen zu reduzieren und Korrosionsphänomene zu verhindern, und derart eingerichtet sind, dass sie wenigstens das erste Sensorelement (11) und das ionisationsbasierte Erfassungselement (19) bedecken,
oder ferner eine Verpackung (80) umfassend, welche Mikrometer-Rahmenfilter umfasst, welche derart angeordnet sind, dass sie wenigstens das erste Sensorelement (11) und das ionisationsbasierte Erfassungselement (19) bedecken.

10. Vorrichtung (1) nach einem der vorhergehenden Ansprüche, welche dazu eingerichtet ist, Druckwerte zu erfassen, welche in einem Bereich zwischen 10⁻¹³ mbar und 10⁴ mbar liegen, wobei der erste Unterbereich von Drücken Drücke zwischen 10⁻⁴ mbar und 10⁴ mbar umfasst, welche mittels des ersten elektromechanischen miniaturisierten Sensorelements (11) erfassbar sind, und der zweite Unterbereich von Drücken Drücke zwischen 10⁻¹³ mbar und 10⁻⁴ mbar umfasst, welche mittels des ionisationsbasierten Erfassungselements (19) erfassbar sind.

11. Vorrichtung (1) nach einem der vorhergehenden Ansprüche, wobei das ionisationsbasierte Erfassungselement (19) wenigstens ein selektiv Ionen filterndes Element umfasst, welches dazu eingerichtet ist, den wenigstens einen lonendetektor (23) gegen all die Ionen abzuschirmen, mit Ausnahme eines jeweiligen ausgewählten Ions, so dass der wenigstens eine lonendetektor (23) den Partialdruck relativ zu dem ausgewählten Ion misst.

12. Vorrichtung (1) nach Anspruch 11, wobei das filternde Element ein filterndes Element ist, welches einstellbar ist, um in Reihe Ionen verschiedener Typen an einem gleichen lonendetektor (23) auszuwählen und auszusenden, so dass der lonendetektor (23) in Reihe den Partialdruck und/oder die Konzentration der verschiedenen ausgewählten Ionen misst.

13. Vorrichtung (1) nach Anspruch 12, wobei das ionisationsbasierte Erfassungselements (19) eine Mehrzahl von zusätzlichen lonendetektoren (23) umfasst, um eine jeweilige Mehrzahl von Ionen zu erfassen, wobei die Mehrzahl von zusätzlichen lonendetektoren (23) mit einer jeweiligen Mehrzahl der selektiv Ionen filternden Elemente gekoppelt ist, wobei jedes der selektiv Ionen filternden Elemente dazu eingerichtet ist, den jeweiligen lonendetektor (23) gegen all die Ionen abzuschirmen, mit Ausnahme eines jeweiligen ausgewählten Ions, so dass die Vorrichtung (1) sowohl als eine Messeinrichtung eines Gesamtdrucks als auch als eine Messeinrichtung eines Partialdrucks und/oder einer Konzentration relativ zu jedem aus der Mehrzahl der ausgewählten Ionen wirkt.

14. Verfahren zum Messen von Druck über einen sehr breiten Bereich, durch eine miniaturisierte Vorrichtung (1), wobei das Verfahren die Schritte umfasst:
- automatisches Erfassen eines Betriebsdruck-Messbereichs durch elektronische Mittel (10) der Vorrichtung (1) auf Grundlage eines sequenziellen Einschalten eines ersten Sensorelement (11) der Vorrichtung (1), welches dazu eingerichtet ist, Drücke in einem ersten Unterbereich zu messen, und eines ionisationsbasierten Erfassungselements (19) der Vorrichtung (1), welches dazu eingerichtet ist, Drücke in einem zweiten Unterbereich zu messen;
- falls der erfasste Betriebs-Unterbereich der erste Unterbereich ist, Erfassen eines ersten Druckwerts (P₁) und Erzeugen eines ersten elektrischen Signals (S₁), welches den ersten Druckwert (P₁) repräsentiert, durch das erste Sensorelement (11);
- falls der erfasste Betriebs-Unterbereich der zweite Unterbereich ist, Erfassen eines zweiten Druckwerts (P₂) und Erzeugen eines zweiten elektrischen Signals (S₂), welches den zweiten Druckwert (P₂) repräsentiert, durch das ionisationsbasierte Erfassungselement (19);
- Bestimmen eines gemessenen Druckwerts (P) auf Grundlage des ersten (S₁) oder zweiten (S₂) elektrischen Signals durch die elektronischen Verarbeitungsmittel (10);
- Bereitstellen als Ausgabe des gemessenen Druckwerts (P) durch Schnittstellenmittel (15) der Vorrichtung (1);
wobei das erste Sensorelement (11), das ionisationsbasierte Erfassungselement (19), die elektronischen Verarbeitungsmittel (10) und die Schnittstellenmittel (15) in einer einzelnen integrierten Vorrichtung umfasst sind, welche mittels integrierter mikro-/nanoelektronischer Techniken hergestellt sind und in einer einzelnen individuellen Verpackung enthalten oder enthaltbar sind;
wobei das Verfahren ferner umfasst:
- Erfassen eines Referenzdruckwerts (P_{ref}) und Erzeugen eines elektrischen Referenzsignals (S_{ref}), welches den Referenzdruckwert (P_{ref}) repräsentiert, mittels wenigstens eines weiteren miniaturisierten Referenzdruck-Sensorelements (12), welches innerhalb eines jeweiligen Gehäuses (13) angeordnet ist, welches dazu geeignet ist, das Referenz-Sensorelement (12) abzudichten;
- Kalibrieren des ersten Sensorelements (11), des ionisationsbasierten Erfassungselements (19) und des Referenz-Sensorelements (12) mittels der elektronischen Verarbeitungsmittel (10) auf Grundlage des elektrischen Referenzsignals (S_{ref}) und gespeicherter Charakterisierungsdaten, welche das Referenz-Sensorelement (12) bei dem Referenzdruck (P_{ref}) charakterisieren, welche in einem Speicher der elektronischen Verarbeitungsmittel (10) gespeichert sind;
- Ausführen durch die elektronischen Verarbeitungsmittel (10) auf Grundlage von von dem Referenz-Sensorelement (12) empfangenen Daten, und Folgendes auszuführen:
- eine Diagnoseprozedur des ionisationsbasierten Erfassungselements (19), um mögliche Leistungsabnahmephänomene zu identifizieren, welchen das ionisationsbasierte Erfassungselement (19) ausgesetzt ist, und
- eine Diagnoseprozedur des ersten Sensorelements (11), um mögliche Hysterese-Phänomene und/oder Mängel und/oder mögliche thermische und/oder mechanische Abweichungen zu identifizieren, welchen das erste Sensorelement (11) ausgesetzt ist.

## Revendications

1. Dispositif miniaturisé (1) pour des mesures de pression sur une très large gamme, comprenant :
- au moins un premier élément capteur électromécanique miniaturisé (11) configuré pour détecter une première valeur de pression respective (P₁) et engendrer un premier signal électrique (S₁) représentant la première valeur de pression (P₁) ;
- un élément détecteur à base d'ionisation (19) configuré pour détecter une deuxième valeur de pression (P₂), l'élément détecteur à base d'ionisation (19) comprenant au moins une source d'ionisation (21), une région d'ionisation (20), des moyens d'extraction (22) et au moins un détecteur d'ions (23) configuré pour détecter des ions et engendrer un deuxième signal électrique (S₂) dépendant de la quantité d'ions détectés et représentant la deuxième valeur de pression (P₂) ;
- des moyens de traitement électroniques (10) fonctionnellement reliés au premier élément capteur (11) et à l'élément détecteur à base d'ionisation (19) et configurés pour déterminer une valeur de pression P mesurée fondée sur les premier (S₁) et deuxième (S₂) signaux électriques détectés ;
- des moyens d'interface (15) fonctionnellement connectés aux moyens de traitement électroniques (10) et configurés pour fournir comme sortie la valeur de pression mesurée (P),
**caractérisé en ce que** le premier élément capteur (11), l'élément détecteur à base d'ionisation (19), les moyens de traitement électroniques (10) et les moyens d'interface (15) sont réunis dans un seul dispositif intégré, fabriqué avec des techniques de micro-/nano-électronique intégrée, ou susceptible d'être contenus dans un seul conditionnement individuel ;
**en ce que** le dispositif comprend en outre au moins un autre élément capteur miniaturisé de pression de référence (12), agencé dans un boîtier (13) respectif adapté pour enfermer le capteur miniaturisé de référence (12) et configuré pour détecter une valeur de pression de référence (P_{ref}) et pour engendrer un signal électrique de référence (S_{ref}) représentant la valeur de pression de référence (P_{ref}) ;
**en ce que** les moyens de traitement électroniques (10) comprennent une mémoire configurée pour stocker des données de caractérisation caractérisant l'élément capteur de référence (12) à la pression de référence (P_{ref}) ;
**en ce que** les moyens de traitement électroniques (10) sont en outre connectés à l'élément capteur de référence (12) pour recevoir le signal de référence (S_{ref}) et sont configurés pour étalonner le premier élément capteur (11), l'élément détecteur à base d'ionisation (19) et l'élément capteur de référence (12) sur la base du signal de référence (S_{ref}) et les données de caractérisation stockées ;
**en ce que** les moyens de traitement électroniques (10) sont en outre configurés pour traiter les données reçues de l'élément capteur de référence (12) et pour mettre en oeuvre, sur la base des données reçues,
- une procédure de diagnostic de l'élément détecteur à base d'ionisation (19) afin d'identifier des phénomènes éventuels de dégradation de performance dont l'élément détecteur à base d'ionisation (19) ferait l'objet, et
- une procédure de diagnostic du premier élément capteur (11) afin d'identifier des phénomènes éventuels d'hystérésis et/ou des imperfections et/ou des décalages éventuels thermiques et/ou mécaniques dont le premier élément capteur (11) ferait l'objet.

2. Dispositif (1) selon la revendication 1, **caractérisé en ce que** la gamme de pressions mesurables est divisée en deux sous-gammes de mesure, et **en ce que** les moyens de traitement électroniques (10) sont configurés pour engendrer la valeur de pression mesurée de manière coïncidente avec la première ou deuxième valeur de pression détectée, sur la base respectivement du premier (S₁) ou deuxième (S₂) signal électrique en fonction du fait que la pression à mesurer appartient à l'une ou à l'autre des sous-gammes de mesure.

3. Dispositif (1) selon la revendication 2, **caractérisé en ce que** les moyens de traitement électroniques (10) sont configurés pour détecter automatiquement la sous-gamme de mesure sur la base d'une mise en route séquentielle du dispositif commençant avec le premier élément capteur (11).

4. Dispositif (1) selon l'une des revendications précédentes, **caractérisé en ce que** le premier élément capteur (11), l'élément détecteur à base d'ionisation (19), les moyens de traitement électroniques (10) et les moyens d'interface (15) sont compris dans un seul chip (40) du dispositif intégré.

5. Dispositif (1) selon la revendication 1, **caractérisé en ce que** chacun des premier élément capteur (11) et capteur de référence (12) comprend un élément oscillant respectif du type MEMS/NEMS configuré pour osciller avec une réponse dynamique qui dépend de la pression à laquelle il est exposé.

6. Dispositif (1) selon l'une des revendications précédentes, **caractérisé en ce que** la région d'ionisation (20) de l'élément détecteur à base d'ionisation (19) contient des particules de gaz dont la pression doit être mesurée, et qu'elle est agencée de façon à être traversée par des particules d'ionisation engendrées par la source (21) afin que les particules d'ionisation ionisent les particules de gaz, engendrant des ions respectifs ;
et **en ce que** les moyens d'extraction d'ions (22) sont configurés pour déterminer une trajectoire préférée pour les ions engendrés, passant par au moins une fenêtre d'extraction d'ions (31) par laquelle les ions quittent la région d'ionisation (20) ;
et **en ce que** ledit au moins un détecteur d'ions (23) présente des dimensions de l'ordre du micromètre, et qu'il est agencé respectivement à ladite au moins une fenêtre d'extraction d'ions (31) de façon à être protégé contre des trajectoires de rayons X engendrés par des impacts d'électrons ionisants sur des parties de la région d'ionisation (20) autres que ledit au moins un détecteur d'ions (23).

7. Dispositif (1) selon la revendication 6, **caractérisé en ce que** les moyens d'extraction d'ions (23) comprennent en outre des moyens formant écran de protection contre des rayons X, configurés pour protéger ledit au moins un détecteur d'ions (23) contre les rayons X afin de réduire l'exposition de celui-ci à des rayons X.

8. Dispositif (1) selon la revendication 1, **caractérisé en ce que** les moyens de traitement électroniques (10) sont configurés pour mettre en oeuvre, au cas où le diagnostic révèle un résultat négatif :
- une procédure d'ajustement et/ou de compensation et/ou d'optimisation du premier élément capteur (11) pour corriger et/ou compenser des phénomènes d'hystérésis identifiés et/ou des imperfections et/ou des décalages, sur la base des résultats de la procédure de diagnostic ;
- une procédure d'ajustement et/ou de compensation et/ou d'optimisation de l'élément détecteur à base d'ionisation (19) pour corriger et/ou compenser des phénomènes de dégradation de performance qui sont identifiés sur la base des résultats de la procédure de diagnostic.

9. Dispositif (1) selon l'une des revendications précédentes, comprenant en outre des films minces de protection configurés pour réduire l'absorption de gaz de traitement et pour prévenir des phénomènes de corrosion et agencés de façon à couvrir au moins le premier élément capteur (11) et l'élément détecteur à base d'ionisation (19)
ou comprenant en outre un ensemble (80) comportant des filtres à cadre micrométriques agencés de façon à couvrir au moins le premier élément capteur (11) et l'élément détecteur à base d'ionisation (19).

10. Dispositif (1) selon l'une des revendications précédentes, configuré pour détecter des valeurs de pression dans la gamme entre 10⁻¹³ mbar et 10⁴ mbar, la première sous-gamme de pression comprenant des pressions entre 10⁻⁴ mbar et 10⁴ mbar, susceptibles d'être détectées à l'aide du premier élément capteur électromécanique miniaturisé (11), et la deuxième sous-gamme de pression comprenant des pressions entre 10⁻¹³ mbar et 10⁻⁴ mbar, susceptibles d'être détectées à l'aide de l'élément détecteur à base d'ionisation (19).

11. Dispositif (1) selon l'une des revendications précédentes, **caractérisé en ce que** l'élément détecteur à base d'ionisation (19) comprend au moins un élément filtrant d'ions sélectif configuré pour protéger ledit au moins un détecteur d'ions (23) contre tous les ions à l'exception d'un ion respectif sélectionné si bien que ledit au moins un détecteur d'ions (23) mesure la pression partielle relative à l'ion sélectionné.

12. Dispositif (1) selon la revendication 11, **caractérisé en ce que** l'élément filtrant est un élément filtrant réglable pour sélectionner et envoyer séquentiellement des ions de types différents sur un même détecteur d'ions (23) si bien que ledit détecteur d'ions (23) mesure séquentiellement la pression partielle et/ou la concentration des différents ions sélectionnés.

13. Dispositif (1) selon la revendication 12, **caractérisé en ce que** l'élément détecteur à base d'ionisation (19) comprend une pluralité de détecteurs d'ions (23) supplémentaires pour détecter une pluralité d'ions respective, la pluralité de détecteurs d'ions (23) supplémentaires étant connectés à une pluralité respective desdits éléments filtrants d'ions sélectifs, chacun des éléments filtrants d'ions sélectifs étant configuré pour protéger le détecteur d'ions (23) respectif contre tous les ions à l'exception d'un ion respectif sélectionné si bien que le dispositif (1) agisse à la fois comme un mètre d'une pression totale et comme un mètre d'une pression partielle et/ou d'une concentration relative à chacun de la pluralité d'ions sélectionnés.

14. Procédé pour mesurer de la pression sur une très large gamme à l'aide d'un dispositif miniaturisé (1), le procédé comprenant les étapes de :
- détecter automatiquement une gamme de mesure de pression de fonctionnement à l'aide de moyens électroniques (10) du dispositif (1) sur la base d'un réglage séquentiel d'un premier élément capteur (11) du dispositif (1) configuré pour mesurer des pressions dans une première sous-gamme, et d'un élément détecteur à base d'ionisation (19) du dispositif (1) configuré pour mesurer des pressions dans une deuxième sous-gamme ;
- si la sous-gamme de fonctionnement détectée est la première sous-gamme, détecter une première valeur de pression (P₁) et engendrer, par le premier élément capteur (11), un premier signal électrique (S₁) représentant la première valeur de pression (P₁) ;
- si la sous-gamme de fonctionnement détectée est la deuxième sous-gamme, détecter une deuxième valeur de pression (P₂) et engendrer, par l'élément détecteur à base d'ionisation (19), un deuxième signal électrique (S₂) représentant la deuxième valeur de pression (P₂) ;
- déterminer par les moyens de traitement électroniques (10) une valeur de pression (P) mesurée fondée sur lesdits premier (S₁) et deuxième (S₂) signaux électriques ;
- fournir comme sortie, par des moyens d'interface (15) du dispositif (1), la valeur de pression mesurée (P) ;
le premier élément capteur (11), l'élément détecteur à base d'ionisation (19), les moyens de traitement électroniques (10) et les moyens d'interface (15) étant réunis dans un seul dispositif intégré, fabriqué avec des techniques de micro-/nano-électronique intégrée, ou susceptible d'être contenus dans un seul conditionnement individuel ;
le procédé comprenant en outre
- détecter, à l'aide d'au moins un autre élément capteur miniaturisé de pression de référence (12), agencé dans un boîtier (13) respectif adapté pour enfermer le capteur miniaturisé de référence (12), une valeur de pression de référence (P_{ref}) et engendrer un signal électrique de référence (S_{ref}) représentant la valeur de pression de référence (P_{ref}) ;
- étalonner, à l'aide des moyens de traitement électroniques (10), le premier élément capteur (11), l'élément détecteur à base d'ionisation (19) et l'élément capteur de référence (12) sur la base du signal de référence (S_{ref}) et de données de caractérisation caractérisant l'élément capteur de référence (12) à la pression de référence (P_{ref}), stockées dans une mémoire des moyens de traitement électroniques (10) ;
- mettre en oeuvre, par les moyens de traitement électroniques (10), sur la base de données reçues de l'élément capteur de référence (12), et effectuer :
- une procédure de diagnostic de l'élément détecteur à base d'ionisation (19) afin d'identifier des phénomènes éventuels de dégradation de performance dont l'élément détecteur à base d'ionisation (19) ferait l'objet, et
- une procédure de diagnostic du premier élément capteur (11) afin d'identifier des phénomènes éventuels d'hystérésis et/ou des imperfections et/ou des décalages éventuels thermiques et/ou mécaniques dont le premier élément capteur (11) ferait l'objet.
